# EUROPEAN PATENT SPECIFICATION

(11) **EP 1 488 160 B1**
(45) Date of publication and mention of the grant of the patent: **23.08.2006**
(21) Application number: 03744440.3
(22) Date of filing: 11.03.2003
(51) Int. Cl.: F16L 55/16

(54) **SEALING METHODS**
DICHTUNGSVERFAHREN
PROCEDES DE FERMETURE

(30) Priority: 13.03.2002 GB 0205920
(43) Date of publication of application: 22.12.2004
(73) Proprietor: Enterprise Managed Services Limited, Leyland, Lancashire PR26 6TX (GB)
(72) Inventor: BARNARD, Dominic, Oxon OX8 5DR (GB); CROCKER, Robert, Slough SL2 4AD (GB)
(74) Representative: Evans, Claire
(86) International application number: PCT/GB2003/001046
(87) International publication number: WO 2003/078886

(56) References cited:
- WO-A-00/55539
- WO-A-96/12134
- DE-A- 3 931 616
- US-A- 3 230 668
- US-A- 5 207 031

## Description

The invention relates to sealing methods, and particularly to a method for providing re-connection to a ferrule of a service line from within the bore of a lined host pipe.

Generally, the liner may consist of a polyethylene tube which is folded, often by being everted along its longitudinal axis to make it easier to be inserted in the host pipe as by being towed therethrough. Once in position the liner is reverted to a circular cross section by pressure to line the host pipe. Host pipes, or mains say for water, oil or gas, generally provide branch or service lines to say a property or dwelling.

Currently service lines are connected to a host pipe using a component called a ferrule which consists of a tube with a taper thread which is screwed into the wall of the host pipe which is usually cast iron. The other end of the ferrule is connected to the supply pipe to the property. The nature of ferrules mean they can protrude into the bore of the host pipe.

Host pipes often decay, and require refurbishment in order to maintain a supply via the service line. Previously it had been the practice to excavate ground round the main, remove it, and relay it This is time consuming and expensive, so the practice of relining a pipe with a liner *in situ* without the need for excavation has been developed. Whilst this is less expensive than excavation it has the disadvantage of masking the ferrules, which are then inoperative. A passage has then to be opened from interiorly of the lined pipe to the ferrule.

Relevant prior art includes WO 00/55539; US 3230668 and DE 3932616.

It is an object of the invention to seek to provide a methode which enables reconnection of a service line from a lined host pipe via a ferrule.

The invention relates to a method for providing reconnection to a ferrule of a service line from within the bore of a lined host pipe adapted to carry a fluid, comprising the steps of locally enlarging a bore of a member of the ferrule/host pipe system, lining the host pipe with a liner, locating the ferrule from within the lined host pipe, forming a passage for fluid through the liner to the ferrule, and forming a seal of the liner with the system, whereby to obviate leakage of fluid between the liner and host pipe, characterised in that the step of enlarging a member of the ferrule/host pipe system comprises either:
(i) increasing the diameter of the bore of the ferrule; or
(ii) locally enlarging the bore of the host pipe so as to define a recess adjacent the ferrule.

The step of forming a passage through the liner may also comprise removing a disc of the liner coaxially with the bore of the ferrule, in which case the disc may be slightly larger in diameter than that of the enlarged part of the bore of the ferrule.

The step of forming a seal may comprise providing a connector device, and inserting said device in the ferrule from inside the host pipe and securing it in the ferrule whereby to seal the liner in position.

The connector device may be secured in the ferrule by a swaging step.

The swaging step may suitably comprise mounting the connector device on a swaging device, offering the connection device up to the bore of the ferrule by moving the swaging device radially of the bore of the host pipe via the passage through the liner, and swaging the connection device from internally thereof by a swaging tool element of the swaging device.

The swaging tool element may comprise a plurality of rotatable balls which are also progressively movable outwardly whereby to engage the interior of the connection device and thin the material thereof and effectively increase the effective diameter of the connector device to create an interference fit with the enlarged part of the bore of the ferrule.

The step of securing the connection device in the ferrule may also comprise a fusing step.

The fusing step may also comprise providing a fusible material exteriorly of the connector device, and fusing said material when the connector device is inserted in the ferrule whereby to provide a fused joint between the bore of the ferrule and the external surface of the connection device.

The fusible material may comprise a ring of solder or brazing material mounted in an annular seating on an external surface of the connection device.

The step of securing the connection device in the ferrule may comprise providing mechanical securing means on an external surface of said device, offering said device up to the ferrule from internally of the host pipe and inserting the device into the ferrule via the passage in the liner, and mechanically securing the device in the ferrule by locking engagement of the mechanical securing means in the wall of the enlarged bore of the ferrule.

The method may comprise providing the mechanical securing means as inclined barb means which grip the wall and act to prevent removal of the connection device.

The connection device may be provided as an externally threaded device which on rotation in the ferrule is screw-engaged therewith.

The method may comprise self-tapping of the connection device in the ferrule on rotation in the ferrule.

The step of penetrating the liner may comprise drawing the liner into sealing engagement with a part of the connection device which is externally situated with respect to the enlarged bore of the ferrule.

The insertion device may comprise a threaded end and an annular seat opposite thereto for supporting the connection device, and the method may also additionally comprise mounting the connection device on the annular seating, and screwing the insertion device thereon through to penetrate same and to insert the connection device in the enlarged part of the bore of the ferrule.

There may also be the step of heating the insertion device prior to penetration of the liner.

The said enlarging step may provide a rebate in the host pipe around the ferrule.

The method may comprise the step of providing the rebate to be substantially coaxial with the ferrule.

The step of providing the rebate may comprise cutting said rebate using a cutting device rotatable about a substantially horizontal axis.

The step of providing the rebate may comprise milling said rebate using a substantially horizontally arranged milling device.

The step of providing the rebate may also comprise using a counter-boring device rotatable about a substantially vertical axis.

The liner may comprise an epoxy adhesive, which preferably may comprise a layer on an external surface of the liner.

Alternatively, the epoxy adhesive may be impregnated in the liner.

The epoxy adhesive may be cured *in situ,* for example by heat or by using ultra violet light.

The step of forming the passage through the liner may also comprise penetrating the liner with a penetrating device which may draw the liner defining the passage away from the ferrule to define a depending cylindrical liner part.

The penetrating device may comprise a device with a screw-threaded free end for penetrating the liner.

The method may include heating the penetration device prior to the penetration step.

The method may comprise the step of supporting the liner adjacent the passage during penetration.

Methods embodying the invention are hereinafter described, by way of example, with reference to the accompanying drawings:
Figs. 1A and 1B show schematically a host pipe with a ferrule mounted therein.
Fig. 2A shows an elevational view of a ball swaging device;
Fig. 2B shows a sectional view of the device of Fig. 2A in use;
Fig. 3 shows a schematic side elevational view of another embodiment for providing a passage through a liner;
Figs. 4A - 4C show steps in another embodiment for providing a passage through a liner;
Figs. 5A - 5F show steps of a yet further embodiment for providing a passage through a liner,
Figs. 6A - 6G show steps in a yet further embodiment for providing a passage through a liner,
Figs. 7A to 7C show respectively to an enlarged scale an embodiment of a robotic device;
Figs. 8A to 8C show respectively part of another embodiment of a robotic device;
Figs. 9A - 9C show a modification of the embodiment of Figs. 8A to 8C; and
Fig. 10 shows insertion of a liner into a host pipe.

Referring to the drawings, in which like parts are referred to by like reference numerals, there is shown a method for providing reconnection to a ferrule 1 of a service line via a bore 2 of the ferrule 1 from within a bore 3 of a lined host pipe 4 adapted to carry a fluid, comprising the steps of locally enlarging a bore 2 or 3 of a member of the ferrule/host pipe system 1, 4, lining the host pipe with a liner 5, locating the ferrule 11 from within the lined host pipe 4, forming a passage for fluid through the liner 5 to the ferrule 1, and forming a seal with the system whereby to obviate leakage of fluid between the liner and host pipe.

In all embodiments the host pipe 4 can be a main such as a water, oil or gas main, and the service line can be a branch pipe to carry say water from the host pipe 4 into a building such as a dwelling.

In practice, a host pipe 4 or main will have several service lines or branches, each of which serves a particular dwelling, and each of which is connected into the host pipe by a fitting usually known as a ferrule 1. The host pipe 4 is usually ferrous, while the ferrule 1 is usually non-ferrous, being made of brass, for example. The host pipe 4 can deteriorate over time, sometimes merely because of age, because of ground subsidence, (the host pipe and service lines are usually buried), or corrosion. To renovate them, and prolong their useful life, they are lined, usually with a polyethylene liner 5 which is everted, inserted into and then pulled through the host pipe, being reverted to the original cylindrical shape by pressure applied internally, usually by passing water into the everted liner. This results in the liner lining the host pipe, usually being firmly applied to the interior surface of the host pipe. The liner, being continuous, covers the ferrule(s), and thus potentially cuts off flow of fluid from the host pipe to the service line.

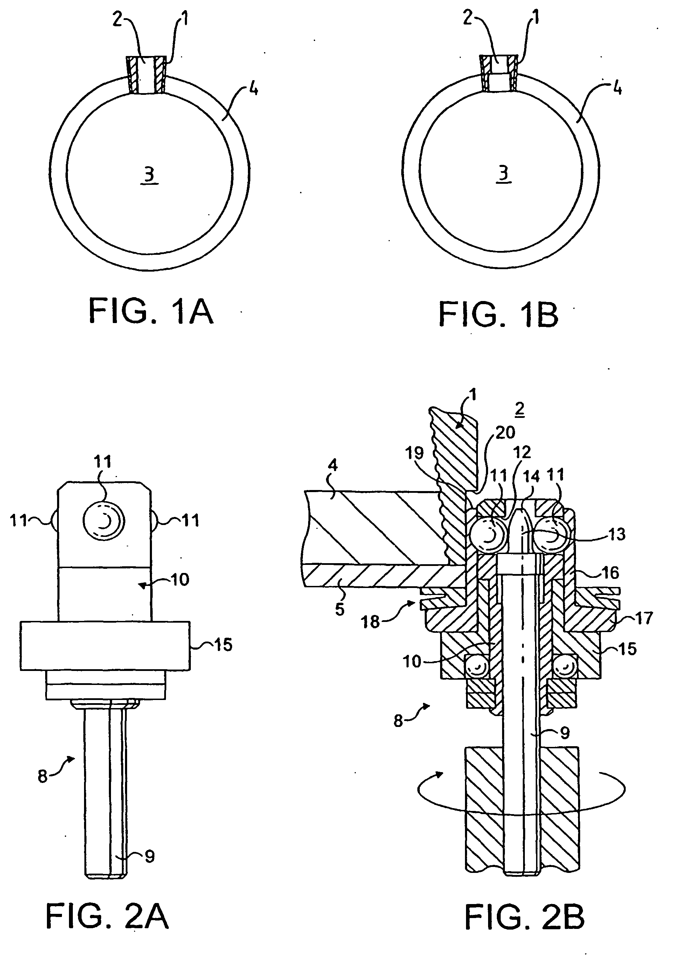

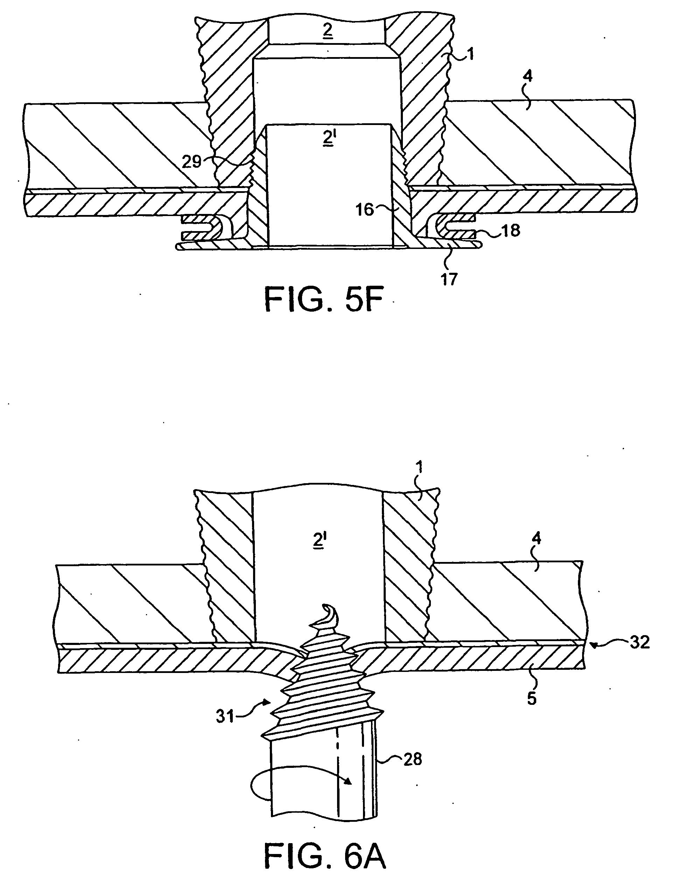

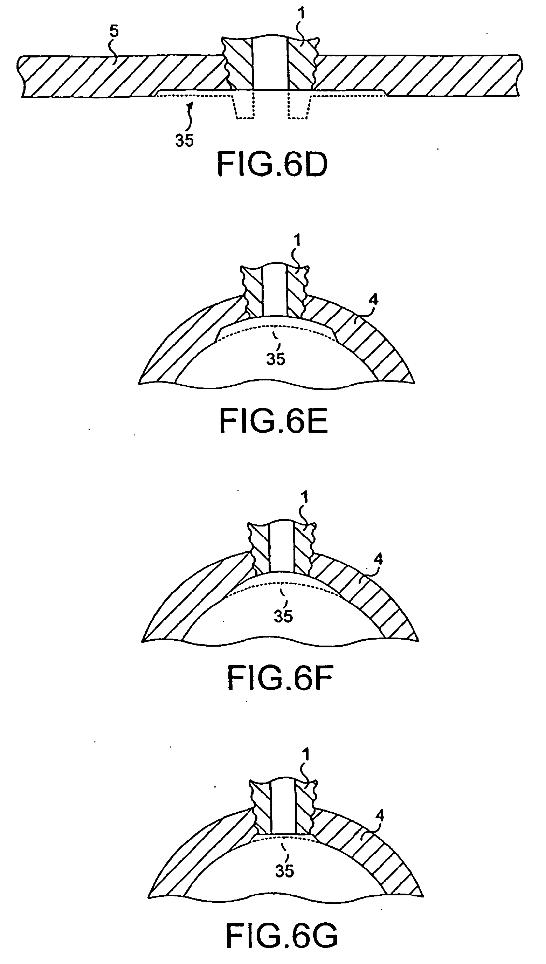

In methods embodying the invention, a passage is opened from the host pipe 4 through the liner 5 to the ferrule 1 and hence to the service line. This is achieved in the respective embodiments of Figs. 1A to 5F by locally enlarging the bore 2 of the ferrule 1 prior to lining the host pipe 4 with the liner 5, while in the embodiment of Figs. 6A to 6G, this is achieved by locally enlarging the bore 3 of the host pipe 4 round the ferrule.

In all embodiments, a standard-sized local enlargement in the ferrule/host pipe system can be formed. This thus ensures uniformity and where local enlargement of the bore of the ferrule is used, one operation can be used in whatever size of ferrule is inserted in the host pipe. Thus, it is often the case that different sizes of ferrule are used adjacent one another in a length of host pipe.

Using the method embodying the invention, a single enlarging device can be used, to provide uniform bore enlargements, which in turn means that standard connector devices, as described hereinafter, can be used.

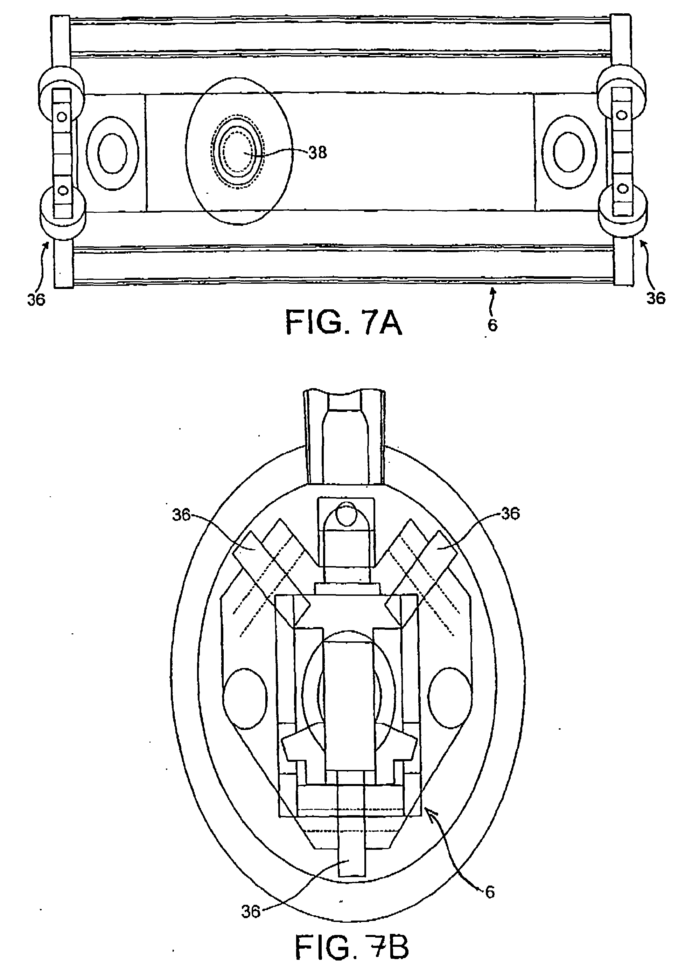

Referring now to Figs. 1A and 1B, Fig. 1A shows schematically a ferrule 1 as inserted in a host pipe 4 before local enlargement of the through bore 2. The ferrule is screwed into the wall of the host pipe using a standard taper thread. As an initial step, the host pipe is usually cleaned, and the ferrule, which can project into the host pipe beyond the inner surface thereof, has been dressed as by grinding to be substantially flush with the internal surface of the bore 3 of the host pipe 4. The bore of the ferrule is then enlarged as shown in Fig. 1B to provide a standard diameter enlarged bore, the enlarging operation being by reaming, using a reaming device mounted on a robotic device 6 (Figs. 7A - 9C) inserted in the host pipe and positioned below the ferrule, positioning being achieved by either visual means such as a television camera or by magnetic induction means such as eddy current means, either of which is carried on the robotic device 6, which itself is controlled remotely and can travel along the host pipe 4 and be stationed at a desired position under a ferrule 1.

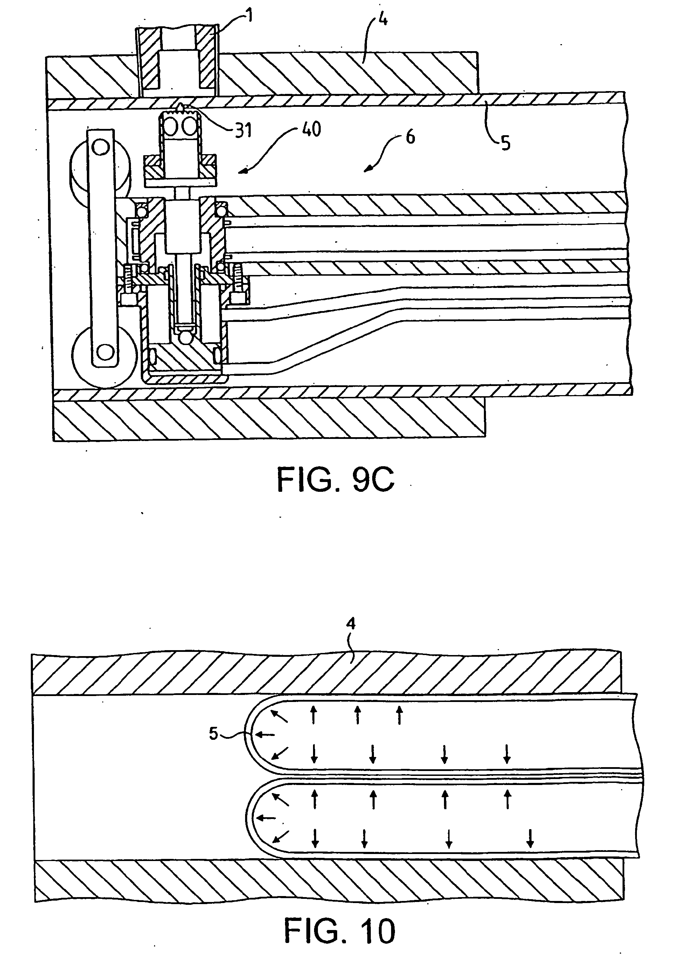

After the, or each ferrule in a length of host pipe has been prepared as shown in Figs. 1A and 1B, the host pipe is lined with a liner 5 as shown in Fig. 10, being reverted to its circular cross section using water pressure, the water used for this being drained from the liner. The robotic device 6 is then launched into the lined pipe 4, and the position of the or each ferrule 1 is determined using an electromagnetic technique which in turn uses eddy currents, the eddy currents technique monitoring the impedance of an electrical coil close to the surface under inspection, in this case the ferrule/host pipe system 1, 4. Essentially as an instrument including the coil approaches the site of a particular ferrule, a change of impedance is detected, caused by the non-ferrous ferrule. A read-out at a remote location indicates the centre line of the ferrule to better than +/- 0.5mm. The sensor can sense the circumferential as well as the axial position of a ferrule.

The centre line of the ferrule having been detected, a disc or coupon is removed from the liner coaxially with the bore of the ferrule by a cutting tool of the robotic device 6. Typically, the removed disc has a diameter slightly larger than the diameter of the reamed enlarged bore 2 in the ferrule 1, typically being about 12mm. Once the disc is removed, a connector device is mounted on an insertion device in the form of a ball swaging device 8 is offered up to and inserted in the bore of the ferrule through the passage opened through the liner by removal of the disc of liner material.

The swaging device 8 and its operation are shown in Figs. 2A and 2B. The device 8 has a spindle 9 which is rotatable about its longitudinal axis, and which can be raised relative to a body 10 which has a plurality of circumferentially arranged balls 11 which protrude from respective orifices 12 in the body 10. The upper end of the spindle 9 has a parallel lower, as viewed part 13, leading to a tapered or conical end 14, which end contacts the balls 11 at the start of a swaging operation. The body 10 has an annular support or flange 15, on which a metal or metallic connector device 16, which is cylindrical, itself having an annular flange 17 which seats on the flange 15, and which cylindrical part is of an outside diameter just to be received in the enlarged bore of the ferrule and contacts the boundary surface of the hole defining the passage through the liner. Between the flange and the liner there is an annular compressible connector seal 18 of the configuration shown (Fig. 2B), which may have a butyl or other adhesive to assist securing it to the flange and/or the liners.

The spindle 9 is raised from the robotic device 6 so that the cylindrical part of the connector device 16 is pushed into the enlarged bore 2 of the ferrule 1 and the seal 18 is compressed between the flange 17 of the connector device 16 and the inner surface of the liner 5. This action also presses the outer surface of the liner into firm mechanical contact with the bore of the host pipe 4. Once the top 19 (as viewed) of the cylindrical part of the connector device 16 lands on a shoulder 20 defining the transition between the enlarged bore of the ferrule and the original bore, the connector device 16 is fully inserted. The spindle 19 is then rotated and raised. This action forces the conical tapered portion past the balls 11 (there are three in the embodiment, and they are hardened) so that the balls are in essence forced apart. Stated in another way, the balls move radially outwardly of the spindle 9. This would increase the diameter of the connection device, but it is restrained by the wall of the enlarged bore of the ferrule. This results in a compressive force and elastic strain at the interface between the connector device and the enlarged bore, which results in turn in an increase in diameter of the connector device and thus a tight contact and mechanical attachment and a water tight seal. Eventually, the conical portion 14 of the spindle 9 passes the balls 11, which are then in contact with the cylindrical portion 16, so no further outward movement of the balls 11 occurs.

The swaging tool 8 is then lowered by the robotic device 6, leaving the connector device 16 firmly in place, so that the liner 5 is sealed to the connector device by the connector seal 18, the connector is sealed to the ferrule by the cylindrical portion following swaging and the whole ferrule/host pipe system is mechanically locked by the strength of the swage. Water can then pass from the host pipe through the ferrule to the service connector without leaking between the liner and host pipe.

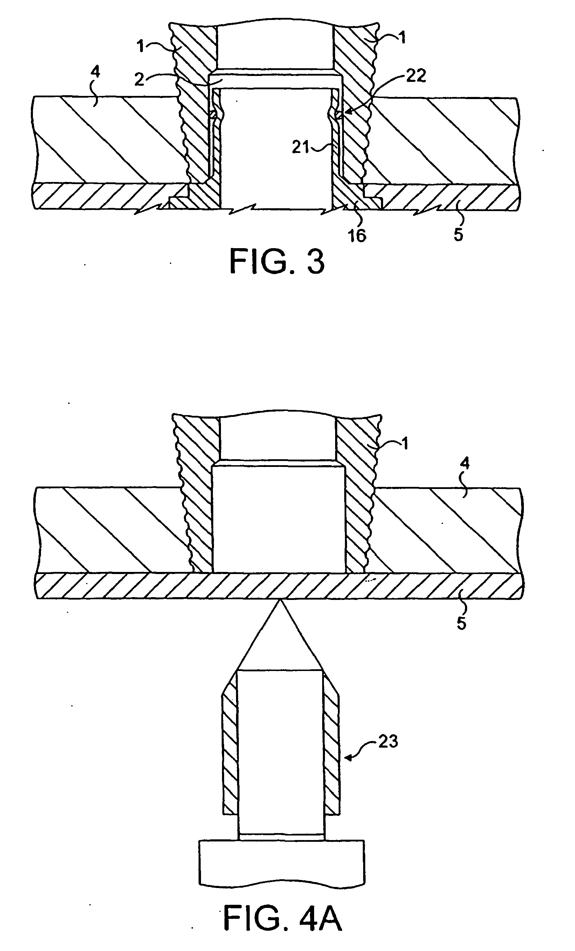

Referring now to Fig. 3, a further embodiment of the method is shown in which a disc of liner 5 is removed as before, after providing an enlarged bore 2 of the ferrule 1. With parts omitted for clarity, and to avoid repetition, the connector device 16 in Fig. 3 is inserted into the ferrule 1 as before via a robotic device 6, the connector device 16 having an annular groove 21 in its cylindrical part in which there is a ring of fusible material such as solder or brazing material 22. Once in position, the solder or brazing material 22 is fused by heating the connector device 16, so that, on cooling, it solidifies to form a secure mechanical and leak tight seal of the liner/connector device and ferrule.

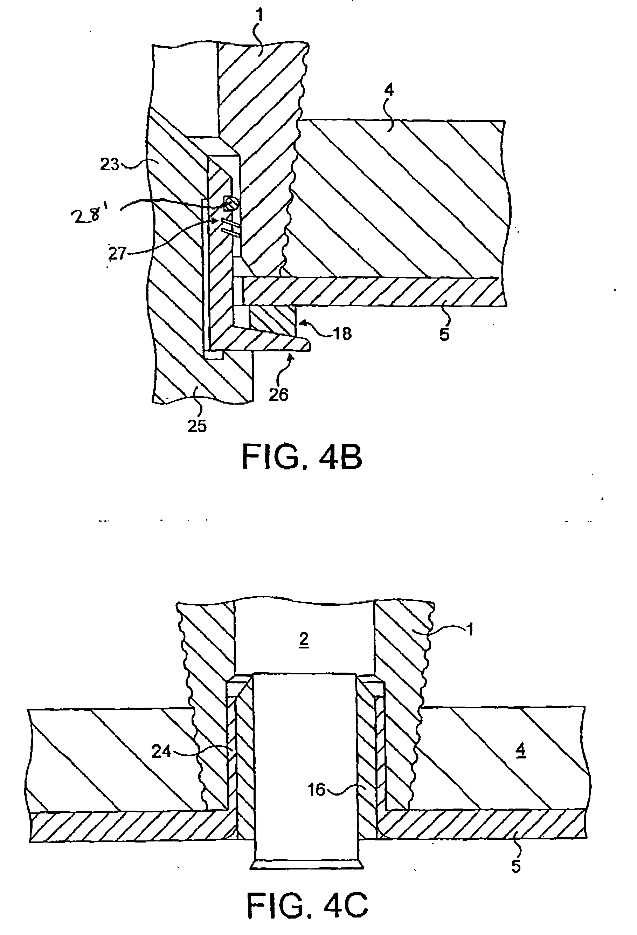

Referring now to Figs. 4A - 4C, there is shown a method embodying the invention which does not require removal of a disc of liner material to provide a passage through the liner 5 to the ferrule 1. In this case, the passage is formed by a push-in or boring method step to provide the passage. In this embodiment, after the ferrule bore enlargement step and pipe lining step, the connector device is inserted into the enlarged bore of the ferrule 1 by being mounted on an insertion device 23 which is pushed into the ferrule 1 through the liner, this action essentially extruding the liner 5 between the connector device 16 and the enlarged bore of the ferrule, as shown in Figs. 4C at 24, Fig. 4A showing schematically the connector device about to be pushed into the prepared ferrule from below via as before a robotic device. Apparatus for carrying out this method is schematically shown in Fig. 4B.

In Fig. 4B, the connector device 16 is mounted on an annular support 25 of an insertion element or finger 23 a laterally extending and inner flange 26 of the connector device 16 supporting the washer 18 between it and the liner 5 so that when the connector is inserted the washer is compressed and the liner is extruded as shown in Fig. 4C, downwardly as viewed projecting spring barbs or fingers 27 gripping the bore of the ferrule as show schematically in Fig. 4B there being an additional seal provided by an annular seal such as an O-ring 28'. When the insertion finger 23 is withdrawn, the connector 16 stays anchored in the ferrule 1 with a fluid type seal between it and the ferrule and the liner whereby to open the passage for fluid flow between the host pipe and the ferrule.

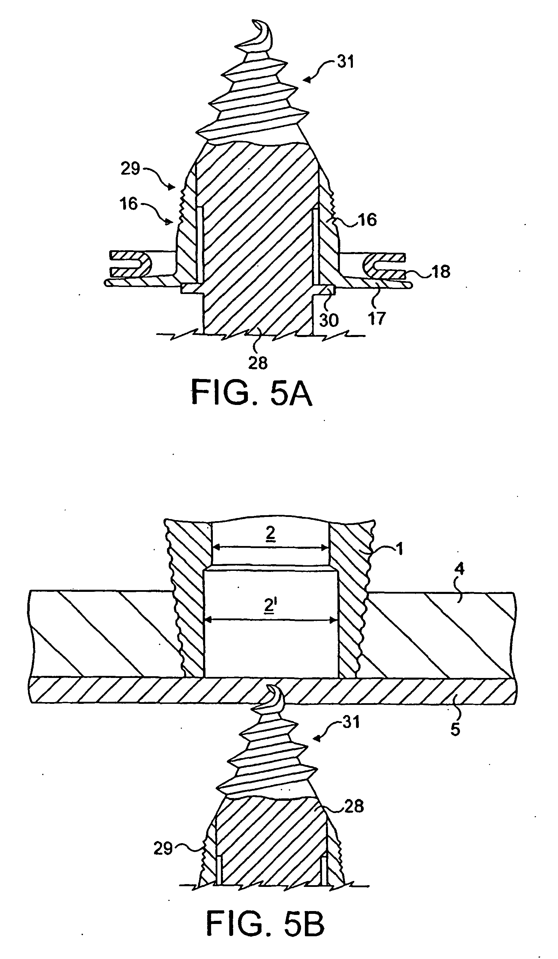

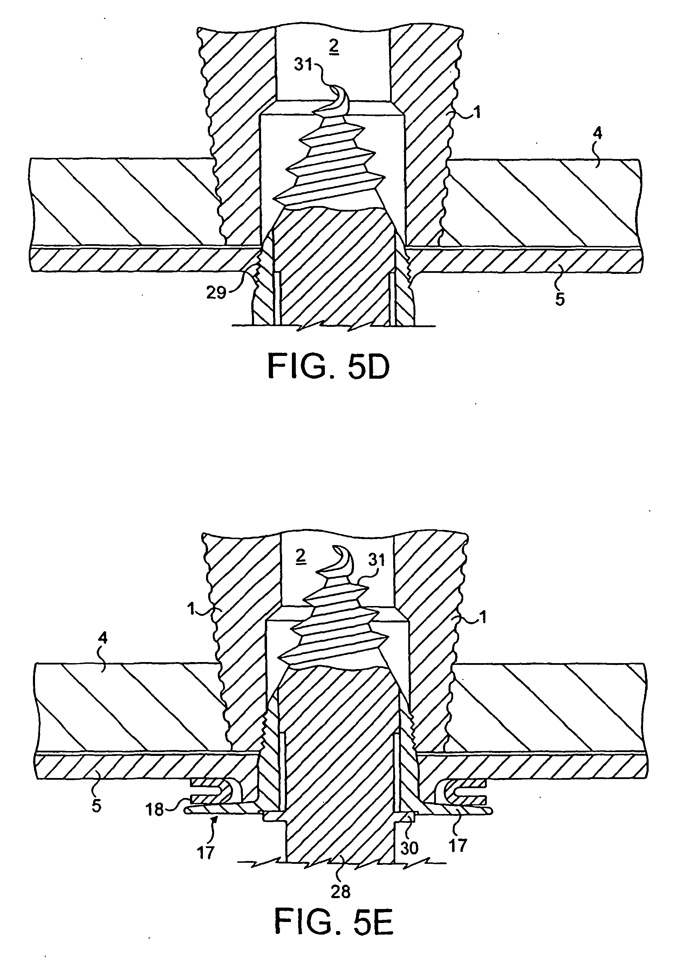

Turning now to Figs. 5A - 5F, there is shown an embodiment comprising a screw-threaded insertion device 16, this embodiment providing that a lined pipe 4 can be reconnected to an existing service connection without the need to remove a "coupon" or disc of cut liner. As shown for this embodiment, the connector element 16 comprises a cylindrical body with a tapered thread 29 at one end which is capable of self-tapping into the bore of the ferrule 1 in use, the thread 29 diminishing or running out or stated another way blending into a smooth surface of conical cross section for providing a secure fluid type seal with a similarly inclined part of the wall of the ferrule defining the bore through that ferrule. The connection element 16 has a laterally extending flange or shoulder 17 on which a sealing member in the form of a U-shaped in cross section annular sealing washer 18 is mounted between that shoulder 17 and the lining, the shoulder having a rebate in which is received a projecting annular shoulder or flange 30 of an insertion finger which is rotatable. As before, the components are mounted on a robot 6 which is traversed down the pipe 4 which is lined, the work station of the robot causing the insertion finger 28 and connecting device 16 to rotate in a clockwise direction as shown in Fig. 5A, whilst also providing a vertical lifting movement to ensure the smooth progression of the insertion finger 28 and connecting device 16 into the bore 2 of the ferrule 1 which is first drilled out or reamed out by a drill bit mounted on the work station to increase the bore 2 of the ferrule 1 prior to the pipe 4 being lined. Moreover, any part of the ferrule which projects into the host pipe is removed as by grinding. A screw threaded tip of the insertion finger 28 has a screw 31 of formation such that as it passes through the liner 5 it does not produce swarf is used to penetrate the liner 5, it being understood that this penetration could be aided for example by heating the penetration tool 28. After penetration by the threaded tip 31, the connecting element 16 passes through the liner 5, rotational 16 movement of the insertion finger 28 and connector element 16 causing the connecting element to self tap into the bore 2, this action compressing the sealing washer 18 to form a leak tight joint. It will be understood that heat could be applied to the connecting element in order to reshape the displaced lining material and also that whilst clockwise rotation has been shown in Fig. 5A, anti-clockwise rotation of the assembly is equally possible, and may be preferable as such anti-clockwise rotation is less likely to loosen the ferrule from its threaded housing once in position. The insertion finger 28 is then withdrawn at the work station by the robot leaving a seal connection as shown in Fig. 5F. It being understood that as the connecting bushes thread "runs out" in other words passes the transition between being a low profile thread and forming a plain surface, a leak tight joint is formed between the connecting element 16 and the end of the ferrule 1.

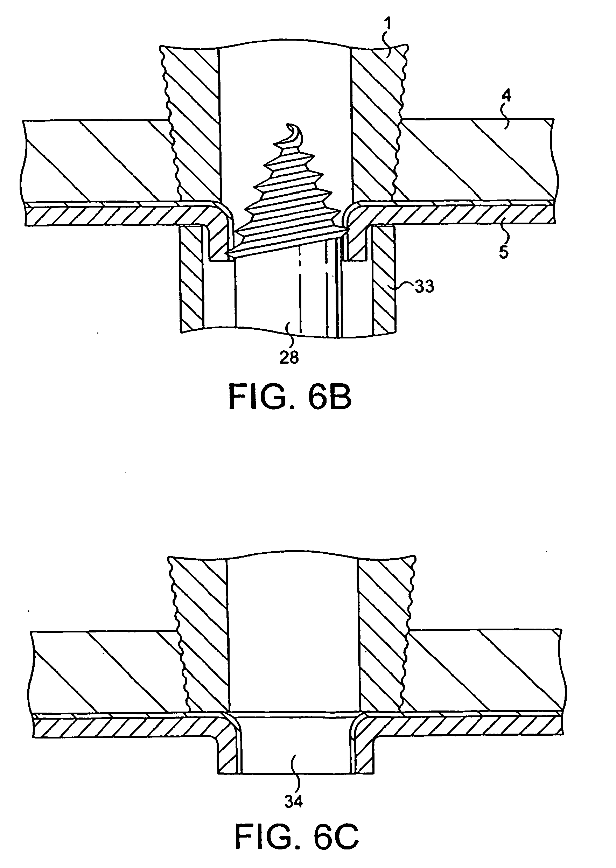

Turning now to the embodiment shown in Figs. 6A - 6G, there is shown an embodiment which is fully structural and can negotiate 90° bends in a pipe. As shown in Fig. 6A, there is again a robot 6 inserted into the lined pipe 4, the liner of which is to be penetrated, there being adhesive 32 indicated in Fig. 6A between the liner 5 and the wall of the host pipe 4. Penetration takes place axially, as before, of the ferrule 1 which has been ground out or reamed out to provide a standard internal diameter 2 as previously described. As the fmger 28 with the screw end 31, like the one described with reference to the embodiments of Fig. 5A - 5F, rotates, it draws the liner 5 away from the ferrule 1, this process continuing until the part of the liner 5 defining an aperture formed therein is virtually at 90° to the axis of the host pipe 5. At the work station, there is a U or saddle-shaped device 33 which is essentially tubular which holds the liner 5 in place and which is heatable to direct heat towards the area of the liner which is being deformed. It will be understood that ultra-violet light may be used instead of heat. This process, as shown in Fig. 6B, essentially produces a hole 34 through the liner 5 akin to a crater (Fig. 6C) and after this crater-like aperture has been formed the direction of rotation of the insertion finger 28 is reversed so that it is withdrawn at and by the work station. As described with previous embodiments, and as shown in Fig. 6D - 6G, any protrusion of the ferrule 1 into the bore of the host pipe 4 is first removed as by grinding before lining, and in order to clean the pipe and produce a leak tight interface between the liner and the bore of the host pipe in addition to removing any protruding part of the ferrule the bore of the host pipe which is slightly recessed as shown exaggerated in Figs. 6D - 6G, at 35.

The recess 35 may be produced in each case by a light machining process using a cutter having for example in Fig. 6E a horizontal axis which moves from left to right centrally of the axis through the bore 2 of the ferrule 1 to provide the counter bore.

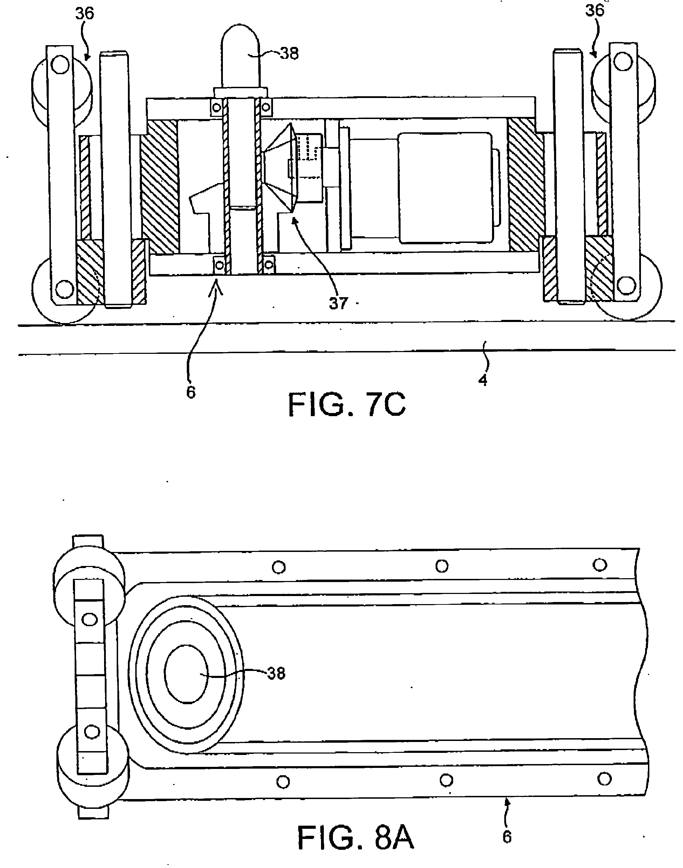

Figs. 7A - 7C show respectively a plan view, end view and part sectional view of one form of robot 6 providing a work station and which has equiangularly disposed bogies or wheels 36 at each end for running along the inner wall of the pipe 6 for moving the robot longitudinally of the pipe. There is a bearing arrangement 37 comprising a crown wheel and pinion which can raise and lower tools 38 as shown in Fig. 7C.

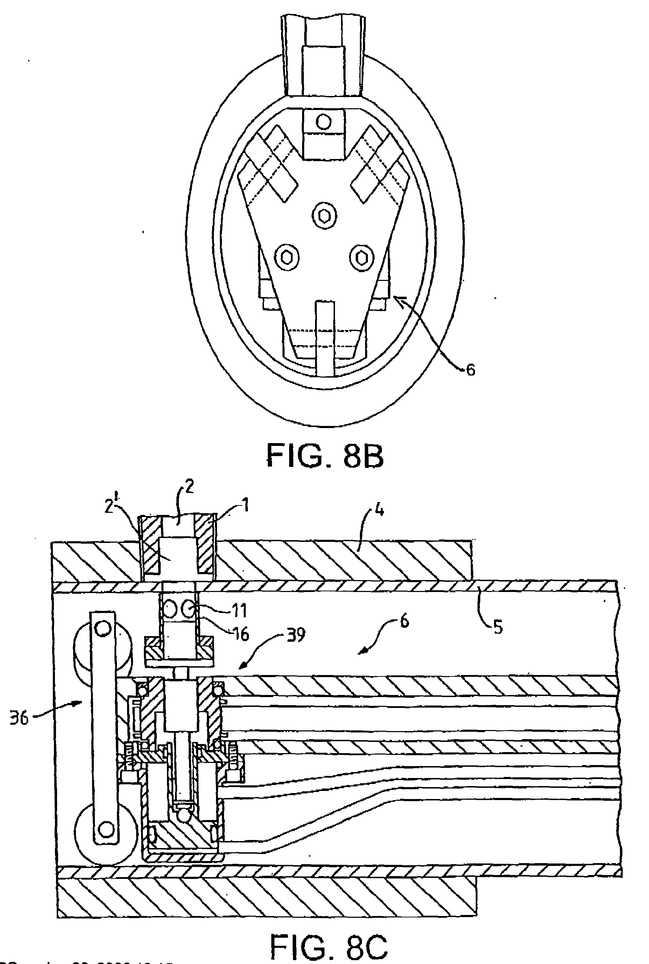

Figs. 8A - 8C show respectively a part of a robot including a robot arm for in this case fitting a connector in a 3 inch diameter pipe there being a double acting hydraulic cylinder and piston arrangement to apply both a raising and lowering action and a withdrawal action, Fig. 8C in part cross sectional view showing a device in which on rotation as the insertion finger rises into the bore, balls 11 are radially forced outwardly to deform the wall of the connection device 16 to engage the ground out part of the wall of the ferrule 1, as in Figs. 2A, 2B for example.

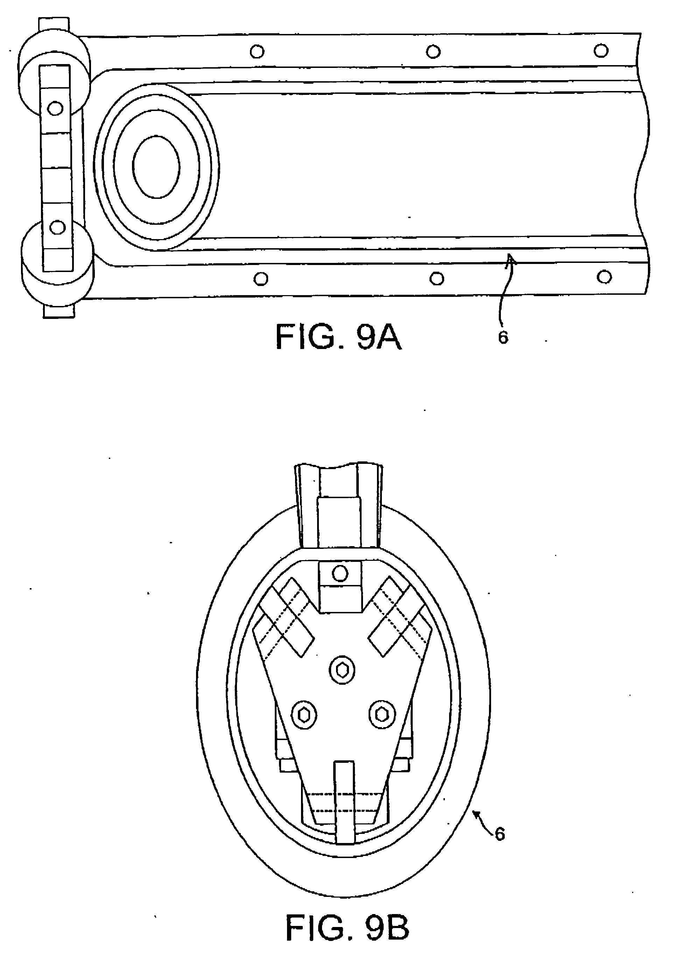

Figs. 9A - 9C show a modification of the embodiment of robot of Figs. 8A - 8C the views being commensurate in Fig. 9, there being shown a penetrating device or insertion finger having a screw formation free end as in for example the embodiment of Figs. 6A - 6G on which is mounted a connecting element interiorly of which there are equiangularly arranged bores which on rotation of the insertion finger and as it continues to rise into the ferrule are forced outwardly by a tapered surface to expand the wall of the connecting element, upset that wall and lock it mechanically to the previously bored out wall of the ferrule. Turning now to the embodiment shown in Fig. 10, there is shown a method of rehabilitation of a water distribution system by a "soft" insertion lining method using an adhesive 5. In this embodiment, deposits are removed from the inner wall of an existing host pipe or main 4 to provide a smooth corrosion resistant, leak prevention lining or structural lining 5, the lining 5 is everted and pulled through the pipe 4 which lining is everted by forcing the everted lining through the host pipe using pressure usually from applied water pressure or compressed air. The lining is usually either coated with or saturated with a suitable resin which has an epoxy or polyester resin. After the lining is installed, the resin is either allowed to cure at ambient temperature or is more commonly cured by heat, applied by hot water, steam or in some instances by other methods such as by incident ultra-violet light. This ensures intimate contact of the host pipe wall and in some cases the lining has been used to displace water within mains. In this way a maximum flow capacity can be obtained. In some instances, for example lining of sewers, the lining comprises a fibre-reinforced resin while for gas mains linings are pressure rated hoses without any resin addition. Where resin is used, it is used to secure the pipe once inverted onto the pipe wall. When host pipe failure occurs for example owing to ground movement the resin will debond locally around the fracture and this allows the hose to accommodate very large angular and longitudinal movements while still holding pressure and maintaining the structural function of the host pipe. Holes formed in the host pipe owing to external corrosion will also be bridged therefore the host pipe can have its life extended. Mains or host pipes of whatever material preferred can be lined with a system such as described in diameters ranging from 75mm to 1000mm.

Thus using the embodiments described herein with reference to the drawings, it is possible to connect a host pipe with a liner to an existing service line or take-off by an existing ferrule, with no leaks and with an operating pressure up to 16 bar with no access required to the outside of the host pipe and therefore avoiding the need to excavate from above ground level. Moreover, strong mechanical support for the liner is provided owing to the connection devices used and moreover, installation can be carried out remotely by robotic equipment operating from within the pipe, and hence from within the liner and penetration of the liner at a ferrule may take place many metres from a base station.

## Claims

1. A method for providing reconnection to a ferrule (1) of a service line from within the bore (3) of a lined host pipe (4) adapted to carry a fluid, comprising the steps of locally enlarging a bore (2,3) of a member of the ferrule/host pipe system (1,4), lining the host pipe with a liner (5), locating the ferrule from within the lined host pipe, forming a passage for fluid through the liner to the ferrule, and forming a seal of the liner with the system, whereby to obviate leakage of fluid between the liner and host pipe, **characterised in that** the step of enlarging a bore of a member of the ferrule/host pipe system comprises either:
(i) increasing the diameter of the bore (2) of the ferrule; or
(ii) locally enlarging the bore of the host pipe so as to define a recess (3 5) adjacent the ferrule.

2. A method according to Claim 1, the step of enlarging a bore of a member of the ferrule/host pipe system comprising increasing the diameter of the bore of the ferrule by increasing the diameter over only part of the length of the ferrule from the host pipe, whereby to provide a stepped bore through the ferrule.

3. A method according to Claim 2, the increased diameter bore being formed to a standard diameter.

4. A method according to Claim 3, the step of increasing the diameter of the bore comprising a reaming step.

5. A method according to any of Claims 2-4, the step of locating the ferrule comprising monitoring electrical impedance of an electrical coil adjacent the interior surface of the host pipe.

6. A method according to Claim 5, the step of forming a passage through the liner comprising removing part of the liner adjacent the ferrule.

7. A method according to Claim 6, the step of forming a passage through the liner comprising removing a disc of the liner coaxially with the bore of the ferrule.

8. A method according to Claim 7, the disc being slightly larger in diameter of the enlarged part of the bore of the ferrule.

9. A method according to Claim 8, the step of forming a seal comprising providing a connector device (16), inserting said device in the ferrule from inside the host pipe and securing it in the ferrule whereby to seal the liner in position.

10. A method according to Claim 9, the connector device being secured in the ferrule by a swaging step.

11. A method according to Claim 10, the swaging step comprising mounting the connector device on a swaging device (8), offering the connector device up to the bore of the ferrule by moving the swaging device radially of the bore of the host pipe via the passage through the liner, and swaging the connector device from internally thereof by a swaging tool element of the swaging device.

12. A method according to Claim 11, the swaging tool element comprising a plurality of rotatable balls (11) which are also progressively movable outwardly whereby to engage the interior of the connector device and thin the material thereof and effectively increase the effective diameter of the connector device to create an interference fit with the enlarged part of the bore of the ferrule.

13. A method according to Claim 9, the step of securing the connector device in the ferrule comprising a fusing step.

14. A method according to Claim 13, the fusing step comprising providing a fusible material exteriorly of the connector device, and fusing said material when the connector device is inserted in the ferrule whereby to provide a fused joint between the bore of the ferrule and the external surface of the connector device.

15. A method according to Claim 14, the fusible material comprising a ring of solder or brazing material (22) mounted in an annular seating on an external surface of the connector device.

16. A method according to Claim 9, the step of securing the connector device in the ferrule comprising providing mechanical securing means on an external surface of said device, offering said device up to the ferrule from internally of the host pipe and inserting the device into the ferrule via the passage in the liner, and mechanically securing the device in the ferrule by locking engagement of the mechanical securing means in the wall of the enlarged bore of the ferrule.

17. A method according to Claim 16, comprising providing the mechanical securing means as inclined barb means which grip the wall and act to prevent removal of the connector device.

18. A method according to Claim 5, the step of forming a passage, through the liner comprising providing a connector, device, and inserting said connector device through the liner into the enlarged part of the bore of the ferrule, whereby to engage the liner between the connector device and in the ferrule.

19. A method according to Claim 18, the step of forming a passage through the bore of the liner comprising providing the connector device on an insertion device (23, 28), inserting the insertion device into the bore by penetration through the liner to open said passage, and securing the connector device in the bore, with the liner secured to the host pipe and ferrule.

20. A method according to Claim 19, the connector device being provided as a push-in connector device.

21. A method according to Claim 20, the push-in connector device being provided with fastening means whereby it is retained in the enlarged part of the bore of the ferrule.

22. A method according to Claim 21, the fastening means comprising inclined barb means (27).

23. A method according to Claim 22, the insertion device (28) comprising a pointed end having an annular seating (30) at an end opposite the pointed end, the method comprising passing the connector device over the insertion device and supporting it on the annular sealing prior to penetration of the liner.

24. A method according to Claim 19, the connector device being provided as an externally threaded device (16,29) which on rotation in the ferrule is screw-engaged therewith.

25. A method according to Claim 24, the method compnsing self-tapping of the connector device in the ferrule on rotation in the ferrule.

26. A method according to Claim 25, the step of penetrating the liner comprising drawing the liner into sealing engagement with a part the connector device which is externally situated with respect to the enlarged bore of the ferrule.

27. A method according to any one of Claims 24 to 26, the insertion device comprising a threaded end (31) and an annular seat opposite thereto for supporting the connector device, the method comprising mounting the connector device on the annular seating, and screwing the insertion device therethrough to penetrate same and to insert the connector device in the enlarged part of the bore of the ferrule.

28. A method according to Claim 27, comprising the step of heating the insertion device prior to penetration of the liner.

29. A method according to Claim 1, the step of enlarging a bore of a member of the ferrule/host pipe system comprising locally enlarging the bore of the host pipe adjacent the ferrule so as to define a recess by providing a rebate in the host pipe around the ferrule.

30. A method according to Claim 29, comprising the step of providing the rebate to be substantially coaxial with the ferrule.

31. A method according to Claim 30, the step of providing the rebate comprising cutting said rebate using a cutting device rotatable about a substantially horizontal axis.

32. A method according to Claim 30, the step of providing the rebate comprising milling said rebate using a substantially horizontally arranged milling device.

33. A method according to Claim 30, the step of providing the rebate comprising using a counter-boring device rotatable about a substantially vertical axis.

34. A method according to any of Claims 1 or 29 to 33, the step of enlarging a bore of a member of the ferrule/host pipe system comprising locally enlarging the bore of the host pipe adjacent the ferrule so as to define a recess, the liner comprising an epoxy adhesive.

35. A method according to Claim 34, the epoxy adhesive comprising a layer on an external surface of the liner.

36. A. method according to Claim 34, the epoxy adhesive being impregnated in the liner.

37. A method according to Claim 35 or Claim 36, comprising curing the epoxy adhesive *in situ.*

38. A method according to Claim 37, comprising curing the epoxy adhesive by heat.

39. A method according to Claim 37, comprising curing the epoxy adhesive using ultra violet light.

40. A method according to any of Claims 1 or 29 to 39, the step of enlarging a member of the ferrule/host pipe system comprising locally enlarging the bore of the host pipe adjacent the ferrule so as to define a recess, the step of locating the ferrule comprising monitoring of electrical impedance of an electrical coil adjacent the interior surface of the host pipe.

41. A method according to Claim 40, the step of forming the passage through the liner comprising penetrating the liner with a penetrating device (28) which draws the liner defining the passage away from the ferrule to define a depending cylindrical liner part.

42. A method according to Claim 41, the penetrating device comprising a device with a screw-threaded free end (31) for penetrating the liner.

43. A method according to Claim 42, the method including heating the penetration device prior to the penetration step.

44. A method according to Claim 43, comprising the step of supporting the liner adj acent the passage during penetration.

45. A method according to any preceding claim, the ferrule/host pipe system comprising a plurality of ferrules, the method comprising the step of providing reconnection at each ferrule.

46. A method according to Claim 45, comprising the step of locally enlarging a bore of each member of the ferrule/host pipe system to the same extent at each member.

47. A method according to any preceding claim, carried out remotely by a robot (6) inserted in the host pipe after lining of the host pipe with the liner.

## Patentansprüche

1. Verfahren zum Herstellen eines Wiederanschlusses an eine Muffe (1) einer Anschlussleitung von innerhalb der Bohrung (3) einer Verteilerleitung (4) mit Futterrohr zum Befördern eines Fluids, das die folgenden Schritte umfasst: örtliches Erweitern einer Bohrung (2, 3) eines Elements der Muffen-/Verteilerrohranlage (1, 4), Auskleiden des Verteilerrohrs mit einem Futterrohr (5), Lokalisieren der Muffe von innerhalb des Verteilerrohrs mit Futterrohr, Bilden eines Durchgangs für Fluid durch das Futterrohr zur Muffe und Bilden einer Dichtung des Futterrohrs mit der Anlage, um **dadurch** Auslecken von Fluid zwischen dem Futterrohr und dem Verteilerrohr zu verhindern, **dadurch gekennzeichnet, dass** der Schritt des Erweiterns einer Bohrung eines Elements der Muffen-/Verteilerrohranlage Folgendes umfasst:
(i) Vergrößern des Durchmessers der Bohrung (2) der Muffe; oder
(ii) örtliches Erweitern der Bohrung des Verteilerrohrs, um eine Aussparung (35) neben der Muffe zu definieren.

2. Verfahren nach Anspruch 1, wobei der Schritt des Erweiterns einer Bohrung eines Elements der Muffen-/Verteilerrohranlage das Vergrößern des Durchmessers der Bohrung der Muffe durch Vergrößern des Durchmessers nur auf einem Teil der Länge der Muffe vom Verteilerrohr her umfasst, um **dadurch** eine abgestufte Bohrung durch die Muffe bereitzustellen.

3. Verfahren nach Anspruch 2, wobei die Bohrung mit vergrößertem Durchmesser einem Standarddurchmesser gemäß ausgebildet wird.

4. Verfahren nach Anspruch 3, wobei der Schritt des Vergrößerns der Bohrung einen Räumschritt umfasst.

5. Verfahren nach einem der Ansprüche 2 bis 4, wobei der Schritt des Lokalisierens der Muffe das Überwachen von elektrischer Impedanz einer elektrischen Spule neben der Innenfläche des Verteilerrohrs umfasst.

6. Verfahren nach Anspruch 5, wobei der Schritt des Herstellens eines Durchgangs durch das Futterrohr das Entfernen eines Teils des Futterrohrs neben der Muffe umfasst.

7. Verfahren nach Anspruch 6, wobei der Schritt des Herstellens eines Durchgangs durch das Futterrohr das Entfernen einer Scheibe des Futterrohrs koaxial mit der Bohrung der Muffe umfasst.

8. Verfahren nach Anspruch 7, wobei die Scheibe einen geringfügig größeren Durchmesser hat als der erweiterte Teil der Bohrung der Muffe.

9. Verfahren nach Anspruch 8, wobei der Schritt des Bildens einer Dichtung Folgendes umfasst: Bereitstellen einer Verbindungsvorrichtung (16), Einsetzen der Vorrichtung in die Muffe von innerhalb des Verteilerrohrs und ihre Befestigung in der Muffe, um **dadurch** das Futterrohr in seiner Lage abzudichten.

10. Verfahren nach Anspruch 9, wobei die Verbindungsvorrichtung durch einen Stauchschritt in der Muffe befestigt wird.

11. Verfahren nach Anspruch 10, wobei der Stauchschritt Folgendes umfasst: Anbringen der Verbindungsvorrichtung an einer Stauchvorrichtung (8), Ansetzen der Verbindungsvorrichtung an die Bohrung der Muffe durch Bewegen der Stauchvorrichtung radial zur Bohrung des Verteilerrohres über den Durchgang durch das Futterrohr und Stauchen der Verbindungsvorrichtung aus ihrem Innern mit einem Stauchwerkzeugelement der Stauchvorrichtung.

12. Verfahren nach Anspruch 11, wobei das Stauchwerkzeugelement eine Mehrzahl von drehbaren Kugeln (11) umfasst, die auch fortschreitend nach außen bewegt werden können, um **dadurch** am Innern der Verbindungsvorrichtung in Anlage zu kommen und ihr Material dünner zu machen und den effektiven Durchmesser der Verbindungsvorrichtung effektiv zu vergrößern, um eine Presspassung mit dem erweiterten Teil der Bohrung der Muffe herzustellen.

13. Verfahren nach Anspruch 9, wobei der Schritt des Befestigens der Verbindungsvorrichtung in der Muffe einen Schmelzschritt umfasst.

14. Verfahren nach Anspruch 13, wobei der Schmelzschritt Folgendes umfasst: Bereitstellen eines schmelzbaren Materials außerhalb der Verbindungsvorrichtung und Schmelzen des Materials, wenn die Verbindungsvorrichtung in die Muffe eingesetzt wird, um **dadurch** eine Schmelzverbindung zwischen der Bohrung der Muffe und der Außenfläche der Verbindungsvorrichtung bereitzustellen.

15. Verfahren nach Anspruch 14, wobei das schmelzbare Material einen Ring aus Löt- oder Hartlötmaterial (22) umfasst, der in einem ringförmigen Sitz an einer Außenfläche der Verbindungsvorrichtung sitzt.

16. Verfahren nach Anspruch 9, wobei der Schritt des Befestigens der Verbindungsvorrichtung in der Muffe Folgendes umfasst: Bereitstellen mechanischer Befestigungsmittel an einer Außenfläche der Vorrichtung, Ansetzen der Vorrichtung an der Muffe von innerhalb des Verteilerrohres und Einsetzen der Vorrichtung in die Muffe über den Durchgang im Futterrohr und mechanisches Befestigen der Vorrichtung in der Muffe durch einen Arretierungseingriff der mechanischen Befestigungsmittel in der Wand der erweiterten Bohrung der Muffe.

17. Verfahren nach Anspruch 16, das das Bereitstellen der mechanischen Befestigungsmittel als geneigte Widerhakenmittel umfasst, die sich in die Wand drücken und bewirken, dass ein Entfernen der Verbindungsvorrichtung verhindert wird.

18. Verfahren nach Anspruch 5, wobei der Schritt des Bildens eines Durchgangs durch das Futterrohr das Bereitstellen einer Verbindungsvorrichtung und das Einsetzen der Verbindungsvorrichtung durch das Futterrohr in den erweiterten Teil der Bohrung der Muffe umfasst, um **dadurch** das Futterrohr zwischen der Verbindungsvorrichtung und der Muffe in Eingriff zu bringen.

19. Verfahren nach Anspruch 18, bei dem der Schritt des Bildens eines Durchgangs durch die Bohrung des Futterrohrs Folgendes umfasst: Bereitstellen der Verbindungsvorrichtung an einer Einsetzvorrichtung (23, 28), Einsetzen der Einsetzvorrichtung in die Bohrung durch Durchdringen des Futterrohrs zum Öffnen des Durchgangs und Befestigen der Verbindungsvorrichtung in der Bohrung, wobei das Futterrohr am Verteilerrohr und an der Muffe befestigt wird.

20. Verfahren nach Anspruch 19, wobei die Verbindungsvorrichtung als Steckverbindungsvorrichtung bereitgestellt wird.

21. Verfahren nach Anspruch 20, wobei die Steckverbindungsvorrichtung mit Befestigungselementen versehen ist, mit denen sie in dem erweiterten Teil der Bohrung der Muffe festgehalten wird.

22. Verfahren nach Anspruch 21, wobei die Befestigungselemente geneigte Widerhakenmittel (27) umfassen.

23. Verfahren nach Anspruch 22, wobei die Einsetzvorrichtung (28) ein spitzes Ende mit einem ringförmigen Sitz (30) an einem dem spitzen Ende gegenüber liegenden Ende umfasst, wobei das Verfahren das Führen der Verbindungsvorrichtung über die Einsetzvorrichtung und ihr Stützen auf der ringförmigen Dichtung vor dem Durchdringen des Futterrohrs umfasst.

24. Verfahren nach Anspruch 19, wobei die Verbindungsvorrichtung als eine Vorrichtung mit Außengewinde (16, 29) bereitgestellt wird, die bei Drehung in der Muffe mit ihr in Schraubeingriff gebracht wird.

25. Verfahren nach Anspruch 24, wobei das Verfahren das Gewindeselbstschneiden der Verbindungsvorrichtung in der Muffe bei Drehung in der Muffe umfasst.

26. Verfahren nach Anspruch 25, wobei der Schritt des Durchdringens des Futterrohrs das Ziehen des Futterrohrs in Dichtungseingriff mit einem Teil der Verbindungsvorrichtung umfasst, der sich in Bezug auf die erweiterte Bohrung der Muffe äußerlich befindet.

27. Verfahren nach einem der Ansprüche 24 bis 26, wobei die Einsetzvorrichtung ein mit Gewinde versehenes Ende (31) und einen ringförmigen Sitz ihm gegenüber zum Stützen der Verbindungsvorrichtung umfasst, wobei das Verfahren das Anbringen der Verbindungsvorrichtung an dem ringförmigen Sitz und das Einschrauben der Einsetzvorrichtung durch ihn hindurch umfasst, um ihn zu durchdringen und die Verbindungseinrichtung in den erweiterten Teil der Bohrung der Muffe einzusetzen.

28. Verfahren nach Anspruch 27, das den Schritt des Erwärmens der Einsetzvorrichtung vor dem Durchdringen des Futterrohrs umfasst.

29. Verfahren nach Anspruch 1, wobei der Schritt des Erweiterns einer Bohrung eines Elements der Muffen-/Verteilerrohranlage das örtliche Erweitern der Bohrung des Verteilerrohrs neben der Muffe umfasst, um eine Aussparung durch Bereitstellen einer Ausnehmung im Verteilerrohr um die Muffe zu definieren.

30. Verfahren nach Anspruch 29, das den Schritt des Bereitstellens der Ausnehmung, so dass sie mit der Muffe im Wesentlichen koaxial ist, umfasst.

31. Verfahren nach Anspruch 30, bei dem der Schritt des Bereitstellens der Ausnehmung Folgendes umfasst: Schneiden der genannten Ausnehmung mit einer Schneidvorrichtung, die um eine im Wesentlichen horizontale Achse drehbar ist.

32. Verfahren nach Anspruch 30, wobei der Schritt des Bereitstellens der Ausnehmung das Fräsen der Ausnehmung mit einer im Wesentlichen horizontal angeordneten Fräsvorrichtung umfasst.

33. Verfahren nach Anspruch 30, wobei der Schritt des Bereitstellens der Ausnehmung das Verwenden einer Senkbohrvorrichtung umfasst, die um eine im Wesentlichen vertikale Achse drehbar ist.

34. Verfahren nach einem der Ansprüche 1 oder 29 bis 33, wobei der Schritt des Erweiterns der Bohrung eines Elements der Muffen-/Verteilerrohranlage das örtliche Erweitern der Bohrung des Verteilerrohres neben der Muffe zum Definieren einer Aussparung umfasst, wobei das Futterrohr einen Epoxidklebstoff aufweist.

35. Verfahren nach Anspruch 34, wobei der Epoxidklebstoff eine Schicht auf einer Außenfläche des Futterohrs umfasst.

36. Verfahren nach Anspruch 34, wobei der Epoxidklebstoff in das Futterrohr imprägniert wird.

37. Verfahren nach Anspruch 35 oder Anspruch 36, das das Aushärten des Epoxidklebstoffs *in situ* umfasst.

38. Verfahren nach Anspruch 37, das das Aushärten des Epoxidklebstoffs durch Wärme umfasst.

39. Verfahren nach Anspruch 37, das das Aushärten des Epoxidklebstoffs durch ultraviolettes Licht umfasst.

40. Verfahren nach einem der Ansprüche 1 oder 29 bis 39, wobei der Schritt des Erweiterns eines Elements der Muffen-/Verteilerrohranlage das örtliche Erweitern der Bohrung des Verteilerrohres neben der Muffe zum Definieren einer Aussparung umfasst, wobei der Schritt des Lokalisierens der Muffe das Überwachen von elektrischer Impedanz einer elektrischen Spule neben der Innenfläche des Verteilerrohrs umfasst.

41. Verfahren nach Anspruch 40, wobei der Schritt des Bildens des Durchgangs durch das Futterrohr das Durchdringen des Futterrohrs mit einer Penetrationsvorrichtung (28) umfasst, die das den Durchgang definierende Futterrohr von der Muffe weg zieht, um einen abhängigen zylindrischen Futterrohrteil zu definieren.

42. Verfahren nach Anspruch 41, wobei die Penetrationsvorrichtung eine Vorrichtung mit einem mit Schraubgewinde versehenen freien Ende (31) zum Durchdringen des Futterrohrs umfasst.

43. Verfahren nach Anspruch 42, wobei das Verfahren das Erwärmen der Penetrationsvorrichtung vor dem Durchdringungsschritt beinhaltet.

44. Verfahren nach Anspruch 43, das den Schritt des Stützens des Futterrohrs neben dem Durchgang während des Durchdringens umfasst.

45. Verfahren nach einem der vorhergehenden Ansprüche, wobei die Muffen-/Verteilerrohranlage eine Mehrzahl von Muffen umfasst, wobei das Verfahren den Schritt des Herstellens eines Wiederanschlusses an jeder Muffe umfasst.

46. Verfahren nach Anspruch 45, das den Schritt des örtlichen Erweiterns der Bohrung jedes Elements der Muffen-/Verteilerrohranlage um den gleichen Umfang an jedem Element umfasst.

47. Verfahren nach einem der vorhergehenden Ansprüche, das mit einem nach dem Auskleiden des Verteilerrohres mit dem Futterrohr in das Verteilerrohr eingesetzten Roboter (6) ferngesteuert ausgeführt wird.

## Revendications

1. Procédé pour établir une raccordement à une bague d'extrémité (1) d'une conduite de service à partir de l'intérieur de l'alésage (3) d'un tuyau de réception revêtu (4) destiné à transporter un fluide, comprenant les étapes d'élargissement local d'un alésage (2, 3) d'un élément de la bague d'extrémité/du système de tuyau de réception (1, 4, de revêtement du tuyau de réception d'un revêtement (5), de localisation de la bague d'extrémité à partir de l'intérieur du tuyau de réception revêtu, de formation d'un passage de fluide à travers le revêtement vers la bague d'extrémité et de formation d'un joint du revêtement avec le système, pour empêcher ainsi une fuite du fluide entre le revêtement et le tuyau de réception, **caractérisé en ce que** l'étape de l'élargissement d'un alésage d'un élément de la bague d'extrémité/du système de tuyau de réception comprend une des étapes ci-dessous :
(i) accroissement du diamètre de l'alésage (2) de la bague d'extrémité ; ou
(ii) élargissement local de l'alésage du tuyau de réception de sorte à définir un évidement (35) près de la bague d'extrémité.

2. Procédé selon la revendication 1, dans lequel l'étape d'élargissement d'un alésage d'un élément de la bague d'extrémité/du système du tuyau de réception comprend l'étape d'accroissement du diamètre de l'alésage de la bague d'extrémité en accroissant le diamètre sur une partie seulement de la longueur de la bague d'extrémité à partir du tuyau de réception, pour former ainsi un alésage étagé à travers la bague d'extrémité.

3. Procédé selon la revendication 2, dans lequel l'alésage à diamètre accru est formé en un alésage à diamètre standard.

4. Procédé selon la revendication 3, dans lequel l'étape d'accroissement du diamètre de l'alésage comprend une étape d'alésage.

5. Procédé selon l'une quelconque des revendications 2 à 4, dans lequel l'étape de localisation de la bague d'extrémité comprend l'étape de surveillance de l'impédance électrique d'une bobine électrique adjacente à la surface interne du tuyau de réception.

6. Procédé selon la revendication 5, dans lequel l'étape de formation d'un passage à travers le revêtement comprend l'étape de retrait d'une partie du revêtement près de la bague d'extrémité.

7. Procédé selon la revendication 6, dans lequel l'étape de formation d'un passage à travers le revêtement comprend l'étape de retrait d'un disque du revêtement, de manière coaxiale à l'alésage de la bague d'extrémité.

8. Procédé selon la revendication 7, dans lequel le disque a un diamètre légèrement supérieur à celui de la partie élargie de l'alésage de la bague d'extrémité.

9. Procédé selon la revendication 8, dans lequel l'étape de formation d'un joint comprend les étapes de fourniture d'un dispositif de raccordement (16), d'insertion dudit dispositif dans la bague d'extrémité à partir de l'intérieur du tuyau de réception et de sa fixation correspondante dans la bague d'extrémité, pour assurer ainsi un positionnement étanche du revêtement.

10. Procédé selon la revendication 9, dans lequel le dispositif de raccordement est fixé dans la bague d'extrémité par une étape de refoulement.

11. Procédé selon la revendication 10, dans lequel l'étape de refoulement comprend les étapes de montage du dispositif de raccordement sur un dispositif de refoulement (8), de présentation du dispositif de raccordement à l'alésage de la bague d'extrémité en déplaçant le dispositif de refoulement radialement par rapport à l'alésage du tuyau de réception à travers le passage du revêtement et de refoulement du dispositif de raccordement à partir de l'intérieur correspondant par un outil de refoulement du dispositif de refoulement.

12. Procédé selon la revendication 11, dans lequel l'élément d'outil de refoulement comprend plusieurs billes rotatives (11), pouvant aussi être déplacées progressivement vers l'extérieur afin de s'engager dans l'intérieur du dispositif de raccordement et affiner le matériau de celui-ci afin d'augmenter effectivement le diamètre effectif du dispositif de raccordement, pour établir un ajustement serré avec la partie élargie de l'alésage de la bague d'extrémité.

13. Procédé selon la revendication 9, dans lequel l'étape de fixation du dispositif de raccordement dans la bague d'extrémité comprend une étape de fusion.

14. Procédé selon la revendication 13, dans lequel l'étape de fusion comprend les étapes de fourniture d'un matériau fusible à l'extérieur du dispositif de raccordement et de fusion dudit matériau lors de l'insertion du dispositif de raccordement dans la bague d'extrémité, pour former ainsi un joint à fusion entre l'alésage de la bague d'extrémité et la surface externe du dispositif de raccordement.

15. Procédé selon la revendication 14, dans lequel le matériau fusible on comprend un anneau en matériau de soudure ou de brasure (22) monté dans un logement annulaire sur une surface externe du dispositif de raccordement.

16. Procédé selon la revendication 9, dans lequel l'étape de fixation du dispositif de raccordement dans la bague d'extrémité comprend les étapes de fourniture de moyens de fixation mécaniques sur une surface externe dudit dispositif, de présentation dudit dispositif à la bague d'extrémité à partir de l'intérieur du tuyau de réception et d'insertion du dispositif dans la bague d'extrémité à travers le passage dans le revêtement, et de fixation mécanique du dispositif dans la bague d'extrémité par engagement par verrouillage des moyens de fixation mécaniques dans la paroi de l'alésage élargi de la bague d'extrémité.

17. Procédé selon la revendication 16, comprenant l'étape de fourniture des moyens de fixation mécaniques sous forme de moyens de picot inclinés, saisissant la paroi et servant à empêcher le retrait du dispositif de raccordement.

18. Procédé selon la revendication 5, dans lequel l'étape de formation d'un passage à travers le revêtement comprend les étapes de fourniture d'un dispositif de raccordement et d'insertion dudit dispositif de raccordement à travers le revêtement dans la partie élargie de l'alésage de la bague d'extrémité, pour engager ainsi le revêtement entre le dispositif de raccordement et la bague d'extrémité.

19. Procédé selon la revendication 18, dans lequel l'étape de formation d'un passage à travers l'alésage du revêtement comprend les étapes de fourniture d'un dispositif de raccordement sur un dispositif d'insertion (23, 28), d'insertion du dispositif d'insertion dans l'alésage en pénétrant à travers le revêtement pour ouvrir ledit passage et de fixation du dispositif de raccordement dans l'alésage, le revêtement étant fixé sur le tuyau de réception et la bague d'extrémité.

20. Procédé selon la revendication 19, dans lequel le dispositif de raccordement a la forme d'un dispositif de raccordement à insertion par poussée.

21. Procédé selon la revendication 20, dans lequel le dispositif de raccordement à insertion par poussée comporte des moyens de fixation le retenant dans la partie élargie de l'alésage de la bague d'extrémité.

22. Procédé selon la revendication 21, dans lequel les moyens de fixation comprennent des moyens de picot inclinés (27).

23. Procédé selon la revendication 22, dans lequel le dispositif d'insertion (28) comprend une extrémité pointue comportant un logement annulaire (30) au niveau d'une extrémité opposée à l'extrémité pointue, le procédé comprenant les étapes de passage du dispositif de raccordement au-dessus du dispositif d'insertion et de son support dans le logement annulaire avant la pénétration dans le revêtement.

24. Procédé selon la revendication 19, dans lequel le dispositif de raccordement est constitué par un dispositif à filetage externe (16, 29) s'engageant par filetage dans la bague d'extrémité lors de la rotation dans celle-ci.

25. Procédé selon la revendication 24, dans lequel le procédé comprend les étapes d'auto-taraudage du dispositif de raccordement dans la bague d'extrémité lors de la rotation dans la bague d'extrémité.

26. Procédé selon la revendication 25, dans lequel l'étape de pénétration à travers le revêtement comprend les étapes d'engagement étanche du revêtement dans une partie du dispositif de raccordement située à l'extérieur par rapport à l'alésage élargi de la bague d'extrémité.

27. Procédé selon l'une quelconque des revendications 24 à 26, dans lequel le dispositif d'insertion comprend une extrémité filetée (31) et un logement annulaire opposé pour supporter le dispositif de raccordement, le procédé comprenant les étapes de montage du dispositif de raccordement sur le logement annulaire et de vissage du dispositif d'insertion à travers celui-ci afin d'y pénétrer et d'insérer le dispositif de raccordement dans la partie élargie de l'alésage de la bague d'extrémité.

28. Procédé selon la revendication 27, comprenant l'étape de chauffage du dispositif d'insertion avant la pénétration dans le revêtement.

29. Procédé selon la revendication 1, dans lequel l'étape d'élargissement d'un alésage d'un élément de la bague d'extrémité/du système de tuyau de réception comprend l'élargissement local de l'alésage du tuyau de réception près de la bague d'extrémité, de sorte à définir un évidement en formant une feuillure dans le tuyau de réception autour de la bague d'extrémité.

30. Procédé selon la revendication 29, comprenant l'étape de formation de la feuillure de manière pratiquement coaxiale à la bague d'extrémité.

31. Procédé selon la revendication 30, dans lequel l'étape de formation de la feuillure comprend l'étape de fraisage de ladite feuillure par l'intermédiaire d'un dispositif de fraisage à agencement pratiquement horizontal.

32. Procédé selon la revendication 30, dans lequel l'étape de formation de la feuillure comprend l'étape de coupe de ladite feuillure par l'intermédiaire d'un dispositif de coupe pouvant tourner autour d'un axe pratiquement horizontal.

33. Procédé selon la revendication 30, dans lequel l'étape de formation de la feuillure comprend l'étape d'utilisation d'un dispositif de contre-alésage pouvant tourner autour d'un axe pratiquement vertical.

34. Procédé selon l'une quelconque des revendications 1 ou 29 à 33, dans lequel l'étape d'élargissement de l'alésage d'un élément de la bague d'extrémité/du système de tuyau de réception comprend l'étape d'élargissement local de l'alésage du tuyau de réception près de la bague d'extrémité, de sorte à définir un évidement, le revêtement étant composé d'un adhésif époxyde.

35. Procédé selon la revendication 34, dans lequel l'adhésif époxyde comprend une couche sur une surface externe du revêtement.

36. Procédé selon la revendication 34, dans lequel l'adhésif époxyde est imprégné dans le revêtement.

37. Procédé selon les revendications 35 ou 36, comprenant l'étape de durcissement sur place de l'adhésif époxyde.

38. Procédé selon la revendication 37, comprenant l'étape de durcissement par la chaleur de l'adhésif époxyde.

39. Procédé selon la revendication 37, comprenant l'étape de durcissement de l'adhésif époxyde par la lumière ultraviolette.

40. Procédé selon l'une quelconque des revendications 1 ou 29 à 39, dans lequel l'étape d'élargissement d'un élément de la bague d'extrémité/du système de tuyau de réception comprend l'étape d'élargissement local de l'alésage du tuyau de réception près de la bague d'extrémité, de sorte à définir un évidement, l'étape de localisation de la bague d'extrémité comprenant l'étape de surveillance de l'impédance électrique d'une bobine électrique près de la surface interne du tuyau de réception.

41. Procédé selon la revendication 40, dans lequel l'étape de formation du passage à travers le revêtement comprend l'étape de pénétration dans le revêtement par un dispositif de pénétration (28) entraînant le revêtement définissant le passage à l'écart de la bague d'extrémité pour définir une partie de revêtement cylindrique à extension.

42. Procédé selon la revendication 41, dans lequel le dispositif de pénétration est constitué par un dispositif comportant une extrémité libre filetée (31) en vue de la pénétration dans le revêtement.

43. Procédé selon la revendication 42, le procédé englobant l'étape de chauffage du dispositif de pénétration avant l'étape de pénétration.

44. Procédé selon la revendication 43, comprenant l'étape de support du revêtement près du passage au cours de la pénétration.

45. Procédé selon l'une quelconque des revendications précédentes, dans lequel la bague d'extrémité/le système de tuyau de réception comprend plusieurs bagues d'extrémités, le procédé comprenant l'étape d'établissement d'une reconnexion au niveau de chaque ferrule.

46. Procédé selon la revendication 45 , comprenant l'étape d'élargissement local d'un alésage de chaque élément de la ferrule/du système de tuyau de réception, à la même extension au niveau de chaque élément.

47. Procédé selon l'une quelconque des revendications précédentes, exécuté à distance par un robot (6) inséré dans le tuyau de réception après le revêtement du tuyau de réception par un revêtement.
